# DEMANDE DE BREVET EUROPEEN

(11) **EP 2 563 077 A1**
(43) Date de publication de la demande: **27.02.2013**
(21) Numéro de dépôt: 12180989.1
(22) Date de dépôt: 20.08.2012
(51) Int. Cl.: H04W 52/02, H04W 56/00

(54) **Procédé de synchronisation d'un réseau de balises radio**

(30) Priorité: 26.08.2011 FR 1157556
(71) Demandeur: Fireflies Rtls, 38240 Meylan (FR)
(72) Inventeur: Marangozov, Vladimir, 81675 Munich (DE); Nicolai, Jean-Michel, 38610 Gieres (FR); Voinot, Stanislas, 54280 Seichamps (FR)
(74) Mandataire: de Beaumont, Michel

(57) **Abrégé**

L'invention concerne un procédé de synchronisation d'au moins une première balise radio (Rᵢ₊₁) par rapport à une deuxième balise radio (Rᵢ), chaque balise étant configurée pour fonctionner selon des cycles périodiques, chaque cycle incluant une période active, ce procédé comprenant les étapes suivantes : a) côté deuxième balise (Rᵢ), à un instant (tri) de chaque période active, émettre une première trame de synchronisation (SYNCᵢ) ; et b) si la première balise (Rᵢ₊₁) ne reçoit pas la première trame (SYNCᵢ) pendant sa période active, augmenter sa période active.

## Description

### Domaine de l'invention

La présente invention concerne un réseau de balises adaptées à émettre et recevoir des signaux radio. Elle vise plus particulièrement un réseau de balises radio à faible consommation d'énergie.

### Exposé de l'art antérieur

On a déjà proposé des dispositifs de communication sans fil fonctionnant selon des cycles périodiques, chaque cycle incluant une période active, pendant laquelle le dispositif peut émettre et recevoir des signaux, et une période de veille, pendant laquelle le dispositif ne peut ni émettre de signaux, ni traiter les signaux qu'il reçoit. Un intérêt de ce mode de fonctionnement est que, en période de veille, la consommation électrique du dispositif est réduite de façon significative par rapport à la consommation en période active. Ceci permet de mettre en oeuvre des communications sans fil dans des systèmes dans lesquels la consommation d'énergie est un paramètre critique. Ce type de communication se prête notamment particulièrement bien aux systèmes à faibles débits de données. En effet, plus la quantité de données à transmettre est faible, plus le rapport cyclique de la période active (rapport de la période active sur la durée totale du cycle) peut être réduit, et plus la consommation d'énergie peut être réduite. On a par exemple proposé d'utiliser des communications de ce type entre des capteurs alimentés par batterie et un serveur distant alimenté par batterie ou par un réseau fixe de distribution d'énergie tel que le secteur.

A titre d'exemple, la norme IEEE 802.15.4 vise un protocole de communication destiné aux réseaux sans fil de faible consommation, faible portée et faible débit. Ce protocole prévoit un fonctionnement du type susmentionné, c'est-à-dire selon des cycles périodiques incluant des périodes actives et des périodes de veille.

Un problème qui se pose est que la prévision de périodes de veille périodiques, pendant lesquelles les dispositifs ne peuvent ni émettre ni recevoir de signaux, rend difficile la synchronisation de plusieurs dispositifs les uns sur les autres.

Le document WO2007102115 décrit un procédé de synchronisation de balises fonctionnant selon des cycles périodiques incluant des périodes actives et des périodes de veille. Ce document prévoit d'introduire un déphasage (différence de période du cycle) entre les balises à synchroniser.

Le document US20030016732 décrit un procédé de synchronisation de noeuds dans un réseau de type Bluetooth et prévoit des transmissions pseudo-aléatoires pour faciliter la synchronisation.

### Résumé

Ainsi, un objet d'un mode de réalisation de la présente invention est de prévoir un procédé de synchronisation d'un réseau de balises radio fonctionnant selon des cycles périodiques, chaque cycle incluant une période active et une période de veille, ce procédé palliant tout ou partie des inconvénients des procédés connus.

Un autre objet d'un mode de réalisation de la présente invention est de prévoir un procédé de synchronisation d'un réseau arborescent de balises radio à faible consommation d'énergie.

Un autre objet d'un mode de réalisation de la présente invention est de réaliser un système permettant, dans une zone couverte par un réseau de balises radio à faible consommation d'énergie, d'inventorier et de mesurer automatiquement des distances entre des biens ou personnes, ainsi que de surveiller et localiser des objets mobiles.

Ainsi, un mode de réalisation de la présente invention prévoit un procédé de synchronisation d'au moins une première balise radio par rapport à une deuxième balise radio, chaque balise étant configurée pour fonctionner selon des cycles périodiques, chaque cycle incluant une période active, ce procédé comprenant les étapes suivantes : a) côté deuxième balise, à un instant de chaque période active, émettre une première trame de synchronisation ; et b) si la première balise ne reçoit pas la première trame pendant sa période active, augmenter sa période active.

Selon un mode de réalisation de la présente invention, le procédé de synchronisation comprend en outre l'étape suivante _{:} c) côté première balise, si la première balise reçoit la première trame pendant sa période active, faire coïncider sa période active avec celle de la deuxième balise.

Selon un mode de réalisation de la présente invention, chaque cycle inclut en outre une période de veille.

Selon un mode de réalisation de la présente invention, à l'étape b), la période active de la première balise est augmentée sur plusieurs cycles successifs.

Selon un mode de réalisation de la présente invention, l'étape b) est mise en oeuvre lorsque la première balise n'a pas reçu la première trame pendant sa période active pendant un nombre entier de cycles successifs.

Selon un mode de réalisation de la présente invention, l'instant susmentionné définit une première durée à compter du début de la période active de la deuxième balise, et le procédé de synchronisation comprend en outre les étapes suivante : lorsque, avant la fin de la première durée à compter du début de la période active de la première balise, la première balise reçoit la première trame, lui faire émettre sans délai une deuxième trame de synchronisation ; et lorsque, à la fin de la première durée à compter du début de la période active de la première balise, la première balise n'a pas reçu la première trame, lui faire émettre sans délai la deuxième trame.

Selon un mode de réalisation de la présente invention, l'instant susmentionné est fixe par rapport au début de chaque période active de la deuxième balise.

Selon un mode de réalisation de la présente invention, cet instant coïncide avec la moitié de la période active de la deuxième balise moins la demi-durée de la première trame.

Selon un mode de réalisation de la présente invention, les balises sont agencées en un réseau arborescent dont la racine est constituée par la deuxième balise.

Un autre mode de réalisation de la présente invention prévoit un système de surveillance d'objets dans une zone, comprenant une pluralité de balises radio parmi lesquelles des balises de référence sont disposées selon un maillage adapté à couvrir la zone, et des balises clientes sont placées sur les objets à surveiller, chaque balise étant configurée pour fonctionner selon des cycles périodiques, chaque cycle incluant une période active, ledit système comprenant des moyens de synchronisation des balises par le procédé de synchronisation susmentionné.

Un autre mode de réalisation de la présente invention prévoit une balise radio configurée pour fonctionner selon des cycles périodiques, chaque cycle incluant une période active, ladite balise comprenant des moyens de synchronisation par rapport à une autre balise par le procédé de synchronisation susmentionné.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma bloc simplifié d'un mode de réalisation d'un système de surveillance d'objets dans une zone couverte par un réseau de balises radio ;
la figure 2 est une vue schématique partielle plus détaillée du système de surveillance de la figure 1 ;
la figure 3 est un chronogramme illustrant un mode de fonctionnement d'une balise radio à faible consommation d'énergie selon des cycles périodiques incluant des périodes actives et des périodes de veille ;
les figures 4 à 6 sont des chronogrammes illustrant le fonctionnement de modes de réalisation d'un procédé de synchronisation d'une balise radio sur une autre balise radio ; et
la figure 7 est un chronogramme illustrant le fonctionnement du procédé de synchronisation des figures 5 et 6 dans le cas d'un réseau arborescent de balises radio à trois niveaux de noeuds successifs.

### Description détaillée

Par souci de clarté, de mêmes éléments ont été désignés par de mêmes références aux différentes figures et, de plus, les diverses figures ne sont pas tracées à l'échelle. En outre, seuls les éléments utiles à la compréhension de l'invention ont été représentés et seront décrits. En particulier, les protocoles de communication de données utilisés par les balises radio pendant leurs périodes actives de fonctionnement n'ont pas été détaillés, les modes de réalisation décrits étant compatibles avec les protocoles d'échange de données usuels.

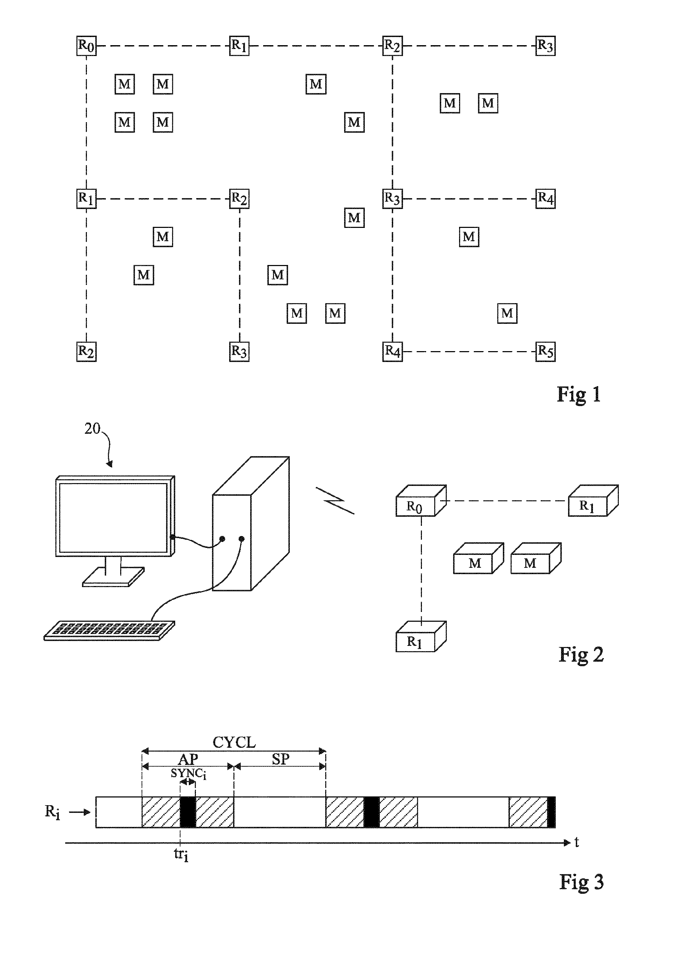

La figure 1 est un schéma bloc simplifié illustrant un mode de réalisation d'un système de surveillance d'objets dans une zone couverte par un réseau de balises radio. A titre d'exemple, la zone couverte est un chantier de construction, et les objets à surveiller sont des engins de chantier ou autres équipements mobiles susceptibles d'être dérobés.

Le système de la figure 1 comprend une pluralité de balises radio adaptées à émettre et recevoir des signaux, parmi lesquelles des balises de référence Ri (i allant de 0 à 5 dans cet exemple) sont disposées selon un maillage adapté à couvrir la totalité de la zone à surveiller, et des balises clientes M sont placées sur les objets à surveiller.

Les balises Ri peuvent être placées sur des éléments de référence fixes, pour définir une zone de surveillance fixe, ou sur des éléments de référence mobiles, pour définir une zone de surveillance mobile (par exemple un chantier d'autoroute en progression). En tout état de cause, les balises Ri définissent des positions de référence de la zone sous surveillance. Le nombre et la disposition des balises Ri sont choisis en fonction de la portée des balises et des dimensions de la zone à surveiller. A titre d'exemple, les balises Ri et M ont une portée de quelques mètres à quelques dizaines de mètres.

Les balises Ri sont des balises de routage, c'est-à-dire qu'elles peuvent communiquer entre elles, et faire suivre des messages émis par d'autres balises Ri voisines. Dans cet exemple, les balises Ri sont associées entre elles de façon à former un réseau arborescent, chaque balise Ri constituant un noeud de routage du réseau. L'indice i représente le niveau de hiérarchie dans l'arbre, la balise R₀ constituant le sommet de l'arbre. Des messages peuvent être transmis depuis le sommet R₀ de l'arbre vers chacune des balises Ri et réciproquement. Dans l'exemple représenté, le réseau de surveillance comprend douze balises Ri associées selon un arbre binaire à six niveaux (R₀ à R₅). Par arbre binaire, on entend que chaque balise Ri est associée directement (sans passer par une autre balise) au maximum avec une balise mère du niveau i-1 et avec deux balises filles du niveau i+1.

En fonctionnement, les balises clientes M émettent périodiquement des signaux à destination des balises Rᵢ, pour signaler leur présence. Le message émis périodiquement par chaque balise M comprend par exemple un numéro d'identification de la balise M. Chaque fois qu'une balise Ri reçoit un message d'identification en provenance d'une balise M, elle met à jour une table recensant toutes les balises M situées dans sa zone de couverture. Dans un exemple de réalisation, le contenu des tables de recensement des balises Ri est régulièrement remonté jusqu'au sommet R₀ de l'arbre, pour vérifier qu'aucune balise M n'est manquante. Le cas échéant, une alarme peut être déclenchée. Le contenu des tables de recensement permet en outre de savoir par quelle(s) balise(s) Ri chaque balise M a été détectée, et donc de répertorier les balises M par sous-région et de localiser approximativement les balises M dans la zone sous surveillance.

En pratique, les messages d'identification émis par les balises clientes M sont généralement reçus non pas par une seule, mais par plusieurs balises Ri distinctes. Dans une variante de réalisation, on pourra donc localiser précisément chaque balise M à l'intérieur de la zone sous surveillance, par trilatération, en mesurant les temps de propagations des signaux d'identification entre la balise M et au moins trois balises Ri distinctes. En variante, les balises Ri peuvent mesurer le niveau de réception (amplitude ou puissance) des signaux en provenance des balises M pour déterminer la distance approximative entre les balises Ri et les balises M (ou réciproquement, les balises M peuvent mesurer le niveau de réception des signaux en provenance des balises Ri pour déterminer la distance approximative entre les balises Ri et les balises M).

La figure 2 est une vue schématique partielle plus détaillée du système de surveillance de la figure 1. Dans cet exemple, la balise R₀ constituant le sommet du réseau est connectée directement à un dispositif 20 de contrôle du système, par exemple un ordinateur configuré pour communiquer avec le réseau de balises Ri par l'intermédiaire de la balise R₀. Le dispositif 20 permet notamment à un utilisateur de consulter la liste des balises clientes M présentes dans la zone sous surveillance, et, le cas échéant, la position des balises M. Le dispositif 20 peut également déclencher automatiquement une alarme ou toute autre mesure de protection lorsqu'une balise M apparaît comme manquante.

Lors du déploiement du réseau, le dispositif de contrôle 20 peut être utilisé pour associer les balises Ri les unes aux autres selon une topologie en arbre, et pour saisir certains paramètres tels que la position géographique des balises Rᵢ. Dans une variante de réalisation, le déploiement du réseau peut se faire de manière semi-automatique, c'est-à-dire qu'après avoir positionné les balises Ri comme il l'entend, l'utilisateur saisit manuellement (par l'intermédiaire du dispositif 20) la position des trois premières balises Ri (côté sommet de l'arbre). Les positions des autres balises Ri peuvent être déterminées automatiquement, par exemple par trilatération, et l'association des balises selon une topologie en arbre peut être faite automatiquement en fonction de leurs positions. En variante, l'utilisateur peut se contenter de paramétrer manuellement la seule balise R₀. Les distances relatives des autres balises Ri (par rapport à la balise R₀) peuvent être déterminées automatiquement en mesurant les niveaux de réception des signaux émis par les balises, et l'association des balises selon une topologie en arbre peut être faite automatiquement en fonction de leurs positions.

La connexion entre le dispositif 20 et la balise R₀ peut être une connexion sans fil ou une connexion filaire. A titre d'exemple, les balises Ri et M sont des balises à faible consommation d'énergie, alimentées par batterie, tandis que le dispositif 20 est alimenté par le secteur. Dans une variante de réalisation, la balise R₀ est intégrée au dispositif 20.

Les balises Ri et M ont par exemple la forme de boîtiers parallélépipédiques de quelques centimètres de côté, susceptibles d'être associés aisément, par exemple par aimantation, collage, etc., à tout type d'objet définissant une position de référence de la zone à surveiller (balises Ri) et à tout type d'objet mobile à surveiller (balises M). Ceci permet un déploiement facile du système de surveillance.

Dans un mode de réalisation préféré, les balises Ri et M sont structurellement identiques, mais sont configurées pour fonctionner selon des modes distincts (mode routeur et mode client). Le mode de fonctionnement peut être sélectionné à la fabrication, ou par l'utilisateur lui-même lors du déploiement du réseau.

On propose ici d'utiliser des balises Ri et M à faible consommation d'énergie, fonctionnant selon des cycles périodiques, chaque cycle incluant une période active, pendant laquelle la balise peut émettre des signaux et traiter les signaux qu'elle reçoit, et une période de veille, pendant laquelle la balise ne peut ni émettre de signaux ni traiter les signaux qu'elle reçoit.

Une difficulté réside dans la synchronisation des périodes actives des balises du système. En effet, si, pendant une période active, une balise Ri émet une trame de signaux de données à destination de sa mère Rᵢ₋₁, et si les périodes actives des balises Ri et Rᵢ₋₁ ne sont pas synchronisées, il existe un risque que la trame parvienne à la balise Rᵢ₋₁ pendant sa période de veille, et soit donc perdue. De même, si une balise M émet une trame d'identification pendant sa période active, et si les périodes actives de cette balise M et des balises Ri environnantes ne sont pas synchronisées, il existe un risque que la trame d'identification soit perdue. Ce risque est d'autant plus élevé que le rapport cyclique de la période active des balises est faible.

Il est donc nécessaire de prévoir des mécanismes de synchronisation permettant de faire coïncider les périodes actives de toutes les balises Ri et M du système (c'est-à-dire de garantir que les périodes actives de toutes les balises du système débutent et se terminent aux mêmes instants), ou permettant à minima de connaître les décalages temporels existants entre les périodes actives des différentes balises.

La figure 3 est un chronogramme illustrant un mode de fonctionnement d'une balise radio de référence Rᵢ, selon des cycles périodiques CYCL, chaque cycle incluant une période active AP et une période de veille SP.

Par souci de simplification, on considère ici et dans la suite de la description que, en régime établi et une fois la synchronisation effectuée, toutes les balises Ri et M du système fonctionnent selon des cycles de même durée, chaque cycle étant divisé en une unique période active AP et une unique période de veille SP, et les périodes actives de toutes les balises du système coïncidant entre elles. Les modes de réalisation décrits ne se limitent toutefois pas à ce cas particulier.

Dans l'exemple représenté, le début de la période active AP coïncide avec le début du cycle CYCL, et le rapport cyclique de la période active est approximativement égal à 0,5, c'est-à-dire que la période active AP se termine approximativement à la moitié du cycle CYCL.

A un instant de référence tri de chaque période active, la balise Ri émet une trame SYNCᵢ de signaux de synchronisation. La trame SYNCᵢ peut comprendre diverses informations telles que le numéro d'identification de la balise Rᵢ, le numéro d'identification de la balise mère Rᵢ₋₁, la position géographique de la balise Rᵢ, le(s) numéro(s) d'identification de la(des) balise(s) fille(s) Rᵢ₊₁, le nombre de noeuds adjacents Ri détectés, la durée du cycle CYCL, la durée de la période active AP, etc.

Lorsqu'une balise fille Rᵢ₊₁ ou une balise cliente M reçoit la trame SYNCᵢ, elle hérite (reçoit et s'approprie) de certains paramètres de synchronisation de la balise Rᵢ, et notamment la durée du cycle et la durée de la période active. Ainsi, toutes les balises Ri et M du système héritent des paramètres de synchronisation de la balise R₀ (sommet de l'arbre). En outre, les temps de transmission des signaux par ondes radio étant négligeables, l'instant de début de réception de la trame SYNCᵢ par une balise fille Rᵢ₊₁ ou par une balise cliente M peut être assimilé à l'instant de référence tri de la balise Rᵢ, ce qui permet à cette balise de synchroniser sa période active sur celle de la balise Rᵢ. Ainsi, les périodes actives de toutes les balises Ri et M du système sont synchronisées sur la période active de la balise R₀.

Dans un mode de réalisation préféré (correspondant à l'exemple représenté), si l'on prend pour origine des temps le début de la période active AP, l'instant de référence tri est égal à la moitié de la période active AP moins la moitié de la durée de la trame de synchronisation SYNCᵢ (tri = (AP - SYNCi)/2). A titre d'exemple, la période active AP peut avoir une durée de 32 ms, et la trame de synchronisation SYNCᵢ peut avoir une durée comprise entre 8 et 10 ms. L'instant tri est alors compris entre 11 et 12 ms à compter du début de la période active AP.

L'invention ne se restreint toutefois pas à ce mode de réalisation particulier. Plus généralement, l'instant tri peut prendre n'importe quelle valeur de l'intervalle [0, AP - SYNCᵢ], du moment que l'instant tri soit figé de manière constante dans cet intervalle, c'est-à-dire que, en régime établi et lorsque le système est synchronisé, si l'on prend pour origine des temps le début de la période active AP, l'instant tri soit identique pour tous les cycles de fonctionnement de la balise Ri.

Entre le début de la période active AP et l'instant tri, et entre la fin de la trame de synchronisation SYNCᵢ et la fin de la période active AP, la balise Ri peut émettre et recevoir des messages, et notamment des messages de données.

Dans un exemple de réalisation, chaque balise Ri du réseau tient à jour :
- un champ comprenant le numéro d'identification de sa mère Rᵢ₋₁ ;
- une table comprenant les numéros d'identification de ses filles Rᵢ₊₁ ;
- une table comprenant les numéros d'identification des noeuds voisins détectés par la balise Rᵢ, c'est-à-dire les balises de référence Rj (ou j est compris entre 0 et n, n étant le dernier niveau de l'arbre, soit n = 5 dans l'exemple de la figure 1) autres que sa mère et ses filles ; et
- une table comprenant les numéros des balises clientes M détectées par la balise Rᵢ.

A la différence des balises de routage Rᵢ, les balises clientes M ne tiennent pas à jour les tables susmentionnées. En outre, les balises M n'émettent pas de trames de synchronisation, mais se contentent de synchroniser leurs périodes actives sur celle des balises Ri, à l'aide des trames SYNCᵢ émises par les balises Rᵢ.

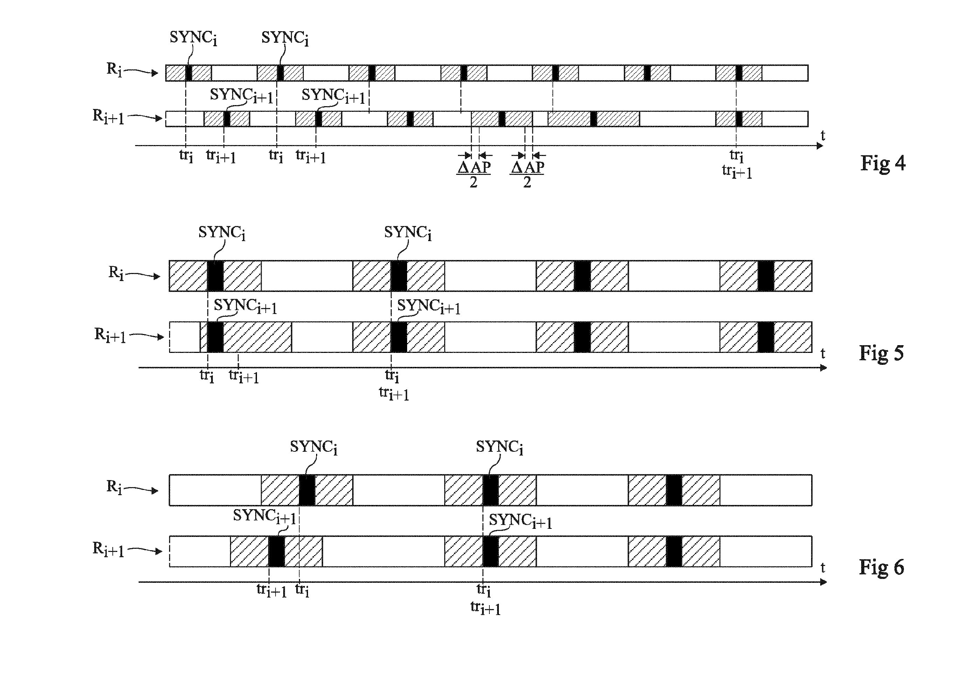

La figure 4 est un chronogramme illustrant un mode de réalisation d'un procédé de synchronisation d'une première balise radio Rᵢ₊₁ (balise fille) sur une deuxième balise radio Ri (balise mère).

A un instant tri de référence de chaque période active de la balise Ri, la balise Ri émet une trame de synchronisation SYNCᵢ. A un instant de référence trᵢ₊₁ de chaque période active de la balise Rᵢ₊₁, la balise Rᵢ₊₁ émet une trame de synchronisation SYNCᵢ₊₁.

Dans l'exemple représenté, la durée et la fréquence des périodes actives des balises Ri et Rᵢ₊₁ sont identiques, mais les balises ne sont pas synchronisées, et en particulier, l'instant de référence tri de la balise Ri correspond à un instant de la période de veille de la balise Rᵢ₊₁. Il en résulte que la balise Rᵢ₊₁ est incapable de traiter la trame SYNCᵢ émise par la balise Rᵢ, et donc de synchroniser sa période active sur celle de la balise Rᵢ₊₁.

Dans cet exemple, si après trois cycles successifs, la balise Rᵢ₊₁ ne reçoit aucune trame de synchronisation pendant sa période active, elle tente de se resynchroniser. L'invention ne se restreint pas à ce cas particulier. Plus généralement, si, après un nombre entier (par exemple choisi lors de la configuration du système) de cycles successifs, la balise Rᵢ₊₁ ne reçoit aucune trame de synchronisation pendant sa période active, elle tente de se resynchroniser.

Durant la phase de resynchronisation, on augmente la durée de la période active de la balise Rᵢ₊₁, jusqu'à ce que la balise Rᵢ₊₁ reçoive une trame SYNCᵢ pendant sa période active. Dans l'exemple représenté, l'augmentation de la période active de la balise Rᵢ₊₁ est progressive, c'est-à-dire que dans un premier temps, le rapport cyclique de la période active n'est pas porté à 1, mais est réglé à une valeur intermédiaire comprise entre sa valeur initiale et 1. Si, au cycle suivant, la balise Rᵢ₊₁ ne reçoit toujours pas la trame SYNCᵢ, le rapport cyclique de sa période active est à nouveau augmenté, et ce jusqu'à ce que la balise Rᵢ₊₁ reçoive la trame SYNCᵢ ou jusqu'à atteindre un rapport cyclique de 1. Le pas ΔAP d'incrémentation de la période active de la balise Rᵢ₊₁ lors des cycles de la phase de resynchronisation peut être ajusté selon les besoins. Si, alors que le rapport cyclique de sa période active est égal à 1, la balise Rᵢ₊₁ ne reçoit toujours pas la trame SYNCᵢ, cela signifie que la balise Ri est perdue, hors de portée, en panne de batterie, etc. Le cas échéant, la balise Rᵢ₊₁ peut reporter un message d'échec de synchronisation.

Lorsque la balise Rᵢ₊₁ reçoit la trame SYNCᵢ, elle synchronise sa période active sur celle de la balise Rᵢ, en tenant compte des données de synchronisation contenues dans la trame SYNCᵢ et de l'instant tri de réception de la trame SYNCᵢ. En particulier, après la synchronisation les instants tri et trᵢ₊₁ d'émission des trames SYNCᵢ et SYNCᵢ₊₁ coïncident sensiblement.

Dans l'exemple représenté, pendant la phase de resynchronisation, les augmentations ΔAP de la période active de la balise Rᵢ₊₁ sont réparties équitablement au début et à la fin de la période active, c'est-à-dire que les instants de début et de fin de la période active sont respectivement avancé et retardé de la demi-durée ΔAP/2 de l'augmentation. L'invention ne se limite toutefois pas à ce cas particulier.

Les figures 5 et 6 sont des chronogrammes illustrant d'autres situations de fonctionnement. Les figures 5 et 6 illustrent des cas de désynchronisation légère, c'est-à-dire que l'instant de référence tri de la balise Ri ne coïncide pas avec l'instant de référence trᵢ₊₁ de la balise Rᵢ₊₁, mais est toutefois compris dans la période active de la balise Rᵢ₊₁.

Dans l'exemple de la figure 5, la période active de la balise Rᵢ₊₁ est en retard par rapport à la période active de la balise mère Ri, c'est-à-dire que l'instant trᵢ₊₁ est postérieur à l'instant tri. Pour ne pas propager le retard aux autres noeuds du réseau, il est prévu, dès que la balise Rᵢ₊₁ reçoit la trame SYNCᵢ (sensiblement à l'instant tri), de lui faire émettre sans délai la trame SYNCᵢ₊₁. Au cycle suivant, la balise Rᵢ₊₁ resynchronise sa période active par rapport à l'instant tri de réception de la trame SYNCᵢ et, le cas échéant, en tenant compte des paramètres de synchronisation contenus dans la trame SYNCᵢ.

Dans l'exemple de la figure 6, la période active de la balise Rᵢ₊₁ est en avance par rapport à la période active de la balise mère Ri, c'est-à-dire que l'instant trᵢ₊₁ est antérieur à l'instant trᵢ. Pour ne pas propager le décalage aux autres noeuds du réseau, il est prévu, à l'instant trᵢ₊₁, de faire émettre sans délai la trame SYNCᵢ₊₁ à la balise Rᵢ₊₁. A l'instant tri, la balise Rᵢ₊₁ reçoit la trame SYNCᵢ, ce qui lui permet, au cycle suivant, de resynchroniser sa période active par rapport à l'instant trᵢ.

Les modes de réalisation décrits en relation avec les figures 5 et 6 permettent, en cas de désynchronisation légère d'une ou plusieurs balises de système, de garantir un rétablissement automatique de la synchronisation de l'ensemble du système par rapport à la période active de la balise R₀.

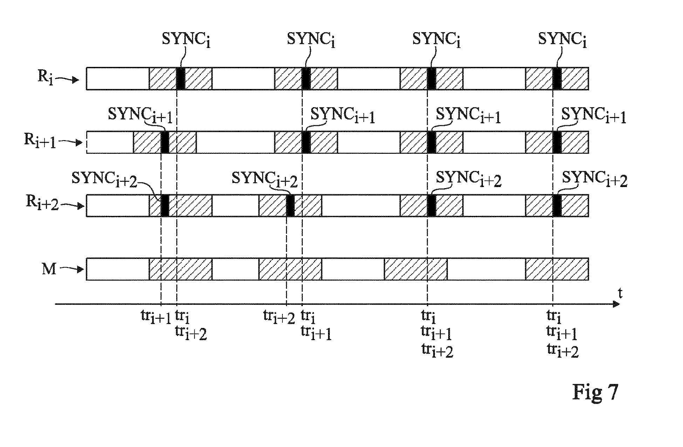

La figure 7 est un chronogramme illustrant le fonctionnement du procédé de synchronisation dans le cas d'un système comprenant un réseau arborescent de balises de référence Rᵢ, Rᵢ₊₁ et Rᵢ₊₂ à trois niveaux de noeuds successifs, et une balise cliente M.

Lors d'un premier cycle, les périodes actives des balises Rᵢ, Rᵢ₊₂ et M coïncident, mais la période active de la balise Rᵢ₊₁ est en avance par rapport à celle de la balise Rᵢ, c'est-à-dire que l'instant trᵢ₊₁ est antérieur à l'instant trᵢ. Conformément au procédé décrit en relation avec la figure 6, on prévoit, à l'instant trᵢ₊₁, de faire émettre sans délai la trame SYNCᵢ₊₁ à la balise Rᵢ₊₁ (bien qu'elle n'ait pas encore reçu la trame SYNCᵢ en provenance de la balise Rᵢ). Il s'en suit que la balise Rᵢ₊₂ reçoit la trame SYNCᵢ₊₁ en avance par rapport à l'instant trᵢ₊₂. Conformément au procédé décrit en relation avec la figure 5, on prévoit de lui faire émettre sans délai (sensiblement à l'instant trᵢ₊₁) la trame SYNCᵢ₊₂. A l'instant trᵢ, la balise Rᵢ₊₁ reçoit la trame SYNCᵢ émise par la balise Rᵢ.

Au cycle suivant, la balise Rᵢ₊₁ synchronise sa période active sur celle de la balise Rᵢ, et les balises Rᵢ₊₂ et M synchronisent leurs périodes actives par rapport à la précédente période active de la balise Rᵢ₊₁. Ainsi, lors du deuxième cycle, les périodes actives des balises Ri et Rᵢ₊₁ coïncident, mais la période active de la balise Rᵢ₊₂ est en avance par rapport à celle de la balise Rᵢ₊₁. Conformément au procédé décrit en relation avec la figure 6, on prévoit, à l'instant trᵢ₊₂, de faire émettre sans délai la trame SYNCᵢ₊₂ à la balise Rᵢ₊₂ (bien qu'elle n'ait pas encore reçu la trame SYNCᵢ₊₁ en provenance de la balise Rᵢ₊₁). A l'instant trᵢ₊₁, la balise Rᵢ₊₂ reçoit la trame SYNCᵢ₊₁ émise par la balise Rᵢ₊₁.

Au cycle suivant, la balise Rᵢ₊₂ synchronise sa période active sur celle de la balise R_{i+1'} et la balise M synchronise sa période active par rapport à la précédente période active de la balise Rᵢ₊₂. Ainsi, lors du troisième cycle, les périodes actives des balises Rᵢ, Rᵢ₊₁ et Rᵢ₊₂ coïncident, mais la période active de la balise M est en avance par rapport à celle des balises de référence.

Lors du troisième cycle la balise M reçoit la trame SYNCᵢ₊₂ émise par la balise Rᵢ₊₂, ce qui lui permet, lors du quatrième cycle, de faire coïncider sa période active avec celles des balises Ri, Rᵢ₊₁ et Rᵢ₊₂.

Des modes de réalisation particuliers de la présente invention ont été décrits. Diverses variantes et modifications apparaîtront à l'homme de l'art.

En particulier, on a décrit ci-dessus un exemple de réalisation d'un système de surveillance d'engins de chantier et équipements de construction sur un chantier couvert par un réseau de balises radio. L'invention ne se restreint pas à cet exemple particulier. L'homme de l'art saura mettre en oeuvre le fonctionnement proposé dans d'autres types d'applications, par exemple pour la surveillance d'objets stockés dans un entrepôt, la surveillance d'appareils médicaux dans un hôpital, etc. L'homme de l'art saura en outre utiliser les procédés de synchronisation décrits ci-dessus dans d'autres types de réseaux que des réseaux de surveillance d'objets. Ces procédés pourront par exemple être utilisés pour mettre en place des réseaux de capteurs à faible consommation d'énergie susceptibles de communiquer entre eux et avec un serveur central par des signaux radio.

Par ailleurs, on a décrit ci-dessus un exemple de réalisation d'un réseau de balises radio reliées selon une topologie en arbre binaire. Les modes de réalisation proposés s'appliquent également à des réseaux en arbre non binaire, c'est-à-dire dans lesquels chaque noeud est susceptible d'être associé à plus de deux noeuds fils.

## Revendications

1. Procédé de synchronisation d'au moins une première balise radio (Rᵢ₊₁) par rapport à une deuxième balise radio (Rᵢ), chaque balise étant configurée pour fonctionner selon des cycles périodiques (CYCL), chaque cycle incluant une période active (AP) et une période de veille (SP), ce procédé comprenant les étapes suivante :
a) côté deuxième balise (Rᵢ), à un instant (trᵢ) de chaque période active, émettre une première trame de synchronisation (SYNCᵢ) ; et
b) si la première balise (Rᵢ₊₁) ne reçoit pas la première trame (SYNCᵢ) pendant sa période active, augmenter sa période active.

2. Procédé selon la revendication 1, comprenant en outre l'étape suivante :
c) côté première balise (Rᵢ₊₁), si la première balise reçoit la première trame (SYNCᵢ) pendant sa période active, faire coïncider sa période active avec celle de la deuxième balise (Rᵢ).

3. Procédé selon la revendication 1 ou 2, dans lequel, à l'étape b), la période active de la première balise (Rᵢ₊₁) est augmentée sur plusieurs cycles successifs.

4. Procédé selon l'une quelconque des revendications 1 à 3, dans lequel l'étape b) est mise en oeuvre lorsque la première balise (Rᵢ₊₁) n'a pas reçu la première trame (SYNCᵢ) pendant sa période active pendant un nombre entier de cycles successifs.

5. Procédé selon l'une quelconque des revendications 1 à 4, dans lequel ledit instant (tri) définit une première durée à compter du début de la période active de la deuxième balise (Rᵢ), ce procédé comprenant en outre les étapes suivante :
lorsque, avant la fin (trᵢ₊₁) de la première durée à compter du début de la période active de la première balise (Rᵢ₊₁), la première balise (Rᵢ₊₁) reçoit la première trame (SYNCᵢ), lui faire émettre sans délai une deuxième trame de synchronisation (SYNCᵢ₊₁) ; et
lorsque, à la fin (trᵢ₊₁) de la première durée à compter du début de la période active de la première balise (Rᵢ₊₁), la première balise (Rᵢ₊₁) n'a pas reçu la première trame (SYNCᵢ), lui faire émettre sans délai la deuxième trame (SYNCᵢ₊₁).

6. Procédé selon l'une quelconque des revendications 1 à 5, dans lequel ledit instant (tri) est fixe par rapport au début de chaque période active (AP) de la deuxième balise (Rᵢ).

7. Procédé selon l'une quelconque des revendications 1 à 6, dans lequel ledit instant (tri) coïncide avec la moitié de la période active (AP) de la deuxième balise (Ri) moins la demi-durée de la première trame (SYNCᵢ).

8. Procédé selon l'une quelconque des revendications 1 à 7, dans lequel les balises sont agencées en un réseau arborescent dont la racine est constituée par ladite deuxième balise (R₀).

9. Système de surveillance d'objets dans une zone, comprenant une pluralité de balises radio parmi lesquelles des balises de référence (Ri) sont disposées selon un maillage adapté à couvrir ladite zone, et des balises clientes (M) sont placées sur les objets à surveiller, chaque balise (Rᵢ, M) étant configurée pour fonctionner selon des cycles périodiques (CYCL), chaque cycle incluant une période active (AP), ledit système comprenant des moyens de synchronisation des balises (Rᵢ, M) par un procédé selon l'une quelconque des revendications 1 à 8.

10. Balise radio configurée pour fonctionner selon des cycles périodiques (CYCL), chaque cycle incluant une période active (AP), ladite balise comprenant des moyens de synchronisation par rapport à une autre balise par un procédé selon l'une quelconque des revendications 1 à 8.
